# EUROPEAN PATENT SPECIFICATION

(11) **EP 3 317 598 B1**
(45) Date of publication and mention of the grant of the patent: **30.12.2020**
(21) Application number: 16818373.9
(22) Date of filing: 30.03.2016
(51) Int. Cl.: F25D 11/02, F25D 23/06

(54) **SPLIT HYBRID INSULATION STRUCTURE FOR AN APPLIANCE**
GETEILTE HYBRIDISOLIERSTRUKTUR FÜR EIN GERÄT
STRUCTURE D'ISOLATION HYBRIDE PARTAGÉE POUR UN APPAREIL

(30) Priority: 01.07.2015 US 201514789303
(43) Date of publication of application: 09.05.2018
(73) Proprietor: Whirlpool Corporation, Benton Harbor, MI 49022 (US)
(72) Inventor: ALSHOURBAGY, Mohamed, Benton Harbor, Michigan 49022 (US); OLIVANI, Andrea, Benton Harbor, Michigan 49022 (US); OSBORN, Ian, St. Joseph, Michigan 49085-1905 (US)
(74) Representative: Spina, Alessandro
(86) International application number: PCT/US2016/024927
(87) International publication number: WO 2017/003532

(56) References cited:
- FR-A1- 2 454 067
- GB-A- 2 129 112
- JP-A- 2005 069 596
- US-A- 3 290 893
- US-A- 4 043 624
- US-A- 5 273 801
- US-A1- 2005 077 806
- US-A1- 2006 266 075
- US-A1- 2013 313 267
- US-B2- 7 895 858

## Description

### FIELD OF THE DEVICE

The device is in the field of insulation structures for appliances, more specifically, a multicomponent hybrid insulation structure incorporating multiple insulation structures. Document US2005/0077806A1 discloses a container *(in particular a galley for use in aircraft)* suitable to be sealed in such a way that vacuum is created therein. Two operative conditions are determined by the opening or closure of the doors. When the doors are closed, vacuum may be provided inside the compartments, while if the doors are open, no vacuum is realizable inside the container. Document US4,043,624 discloses a method of forming a refrigeration apparatus enclosure wherein an inner laminate wall is provided in an outer cabinet for providing the sheet liner and insulation portions of the refrigeration apparatus enclosure. Document US2006/0266075A1 discloses a refrigerator which is provided with a layer of vacuum heat insulating material. Document US3,290,893 discloses a combination refrigerator including fluid amplifier means for controlling the flow of the refrigerated air to the compartments. Document US5,273,801 discloses a thermoformed vacuum insulation container, in particular a fully insulated structure wherein the vacuum may be kept for up to twenty years. When the covering lid is removed, no vacuum rests in the device. *Document* JP2005-69596A *discloses a refrigerator having vacuum insulation panels provided at the side walls of the cabinet. The refrigerator further comprises a control board and an electrical component connected to the control board via bundled wires. The bundled wires are arranged only on the back wall and on the top wall of the cabinet so as not to interfere with the vacuum insulation panels.*

### SUMMARY OF THE DISCLOSURE

The invention is defined by the appended claims. In at least one aspect of the disclosure present for illustration purposes only but not according to the invention, an insulation structure for an appliance includes a first vacuum insulated structure having a top and at least one downward side extending from the top, a lower portion of the at least one downward side defining a lower connection surface. The top and the at least one downward side at least partially define a first insulated interior. A second vacuum insulated structure includes a bottom and at least one upward side extending from the bottom, an upper portion of the at least one upward side defining an upper connection surface. The bottom and the at least one upward side at least partially define a second insulated interior. An intermediate insulation structure includes a top surface and a bottom surface, wherein the top surface engages the lower connection surface of the first vacuum insulated structure to further define the first insulated interior, wherein the bottom surface engages the upper connection surface of the second vacuum insulated structure to further define the second insulated interior, and wherein the intermediate insulation structure includes an appliance utility path within which at least one utility for the appliance is disposed, and wherein the appliance utility path is in communication with the first and second insulated interiors

In at least another aspect of the invention, a first vacuum insulated structure includes a plurality of continuous sides that define an open front, an open end and an engagement surface proximate the open end, wherein the continuous sides at least partially define a first insulated interior, and wherein the plurality of continuous sides is free of internal apertures through the first vacuum insulated structure. An intermediate insulation structure includes a first surface and a second surface, wherein one of the first and second surfaces receives the engagement surface to further define the first insulated interior. The intermediate insulation structure includes an appliance utility path within which at least one utility for the appliance is disposed, and wherein the appliance utility path is in communication with the first insulated interior.

In at least another aspect which is not according to the invention and present for illustration purposes only, a method for forming an insulation structure for an appliance includes disposing at least one utility system within the appliance utility path of the intermediate insulation structure, and engaging the lower connection surface of the first vacuum insulated structure with the top surface of the intermediate insulation structure to define the first insulated interior. The first insulated interior is in communication with the appliance utility path and the at least one utility. The method also includes engaging the upper connection surface of the second vacuum insulation structure with the bottom surface of the intermediate insulation structure to define the second insulated interior. The second insulated interior is in communication with the appliance utility path and the at least one utility. The engagement of the first and second vacuum insulated structures with the intermediate insulation structure forms a split hybrid insulation structure.

These and other features, advantages, and objects of the present device will be further understood and appreciated by those skilled in the art by reference to the following specification, claims, and appended drawings.

### BRIEF DESCRIPTION OF THE DRAWINGS

The foregoing summary, as well as the following detailed description of the device, will be better understood when read in conjunction with the appended drawings. For the purpose of illustrating the device, there are shown in the drawings, certain embodiment(s) which are presently preferred. It should be understood, however, that the device is not limited to the precise arrangements and instrumentalities shown. Drawings are not necessary to scale. Certain features of the device may be exaggerated in scale or shown in schematic form in the interest of clarity and conciseness.
FIG. 1 is a front perspective view of a refrigerated appliance incorporating an embodiment of the split hybrid insulation structure and shown with the doors in an open position;
FIG. 2 is an exploded perspective view of an aspect of the split hybrid insulation structure;
FIG. 3 is a cross-sectional view of the appliance of FIG. 1 taken along line III-III and illustrated with the doors in a closed position;
FIG. 4 is an enlarged cross-sectional view of the refrigerating appliance of FIG. 3 taken at area IV;
FIG. 5 is a top plan view of an aspect of an intermediate insulation structure for the split hybrid insulation system;
FIG. 6 is a cross-sectional view of an appliance incorporating an aspect of the split hybrid insulation structure and including a second intermediate insulation structure for defining a pantry compartment;
FIG. 7 is an enlarged cross-sectional view of the refrigerating appliance of FIG. 6 taken at area VII; and
FIG. 8 is a schematic flow diagram illustrating a method for forming a split hybrid insulation structure for an appliance.

### DETAILED DESCRIPTION

Before the subject device is described further, it is to be understood that the device is not limited to the particular embodiments of the device described below, as variations of the particular embodiments may be made and still fall within the scope of the appended claims. It is also to be understood that the terminology employed is for the purpose of describing particular embodiments or aspects of embodiments, and is not intended to be limiting. Instead, the scope of the present device will be established by the appended claims.

Where a range of values is provided, it is understood that each intervening value, to the tenth of the unit of the lower limit unless the context clearly dictates otherwise, between the upper and lower limit of that range, and any other stated or intervening value in that stated range, is encompassed within the device. The upper and lower limits of these smaller ranges may independently be included in the smaller ranges, and are also encompassed within the device, subject to any specifically excluded limit in the stated range. Where the stated range includes one or both of the limits, ranges excluding either or both of those included limits are also included in the device.

In this specification and the appended claims, the singular forms "a," "an" and "the" include plural reference unless the context clearly dictates otherwise.

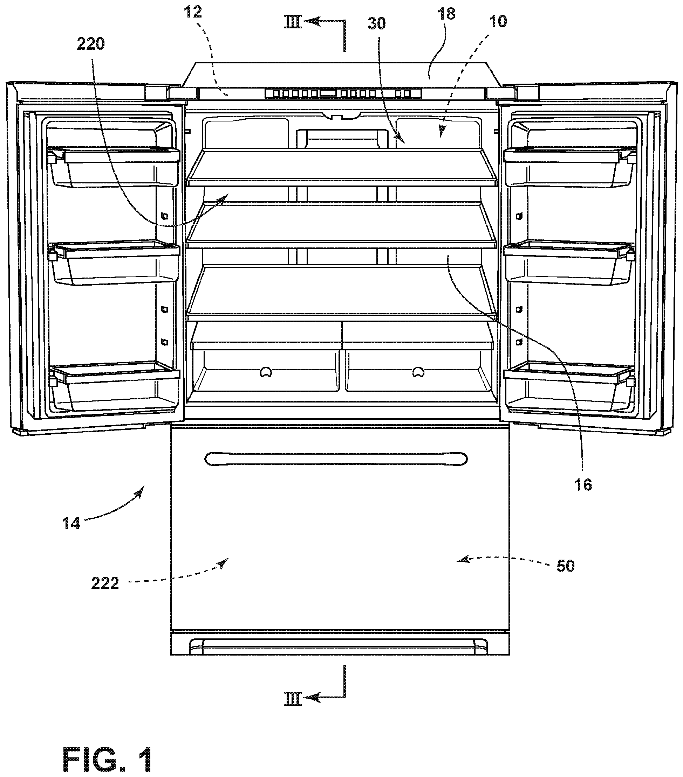

As illustrated in FIGS. 1-4, reference numeral 10 generally refers to a split hybrid insulation structure to be disposed within an insulation cavity 12 of an appliance 14 where the insulation cavity 12 is defined between an inner liner 16 and an outer wrapper 18 of the appliance 14. An insulation structure 10 for the appliance 14 includes a first vacuum insulated structure 20 having a top side 22 and at least one downward side 24 extending from the top side 22. A lower portion 26 of the at least one downward side 24 defines a lower connection surface 28. The top side 22 and the at least one downward side 24 at least partially define a first insulated interior 30. A second vacuum insulated structure 40 includes a bottom side 42 and at least one upward side 44 extending from the bottom side 42. An upper portion 46 of the at least one upward side 44 defines an upper connection surface 48, wherein the bottom side 42 and the at least one upward side 44 at least partially define a second insulated interior 50. An intermediate insulation structure 60 includes top and bottom surfaces 62, 64. The top surface 62 is configured to engage the lower connection surface 28 of the first vacuum insulated structure 20 to further define the first insulated interior 30. The bottom surface 64 of the intermediate insulation structure 60 is configured to engage the upper connection surface 48 of the second vacuum insulated structure 40 to further define the second insulated interior 50. The intermediate insulation structure 60 includes an appliance utility path 66 within which at least one utility system 68 for the appliance 14 is disposed. The appliance utility path 66 is configured to be in communication with the first and second insulated interiors 30, 50.

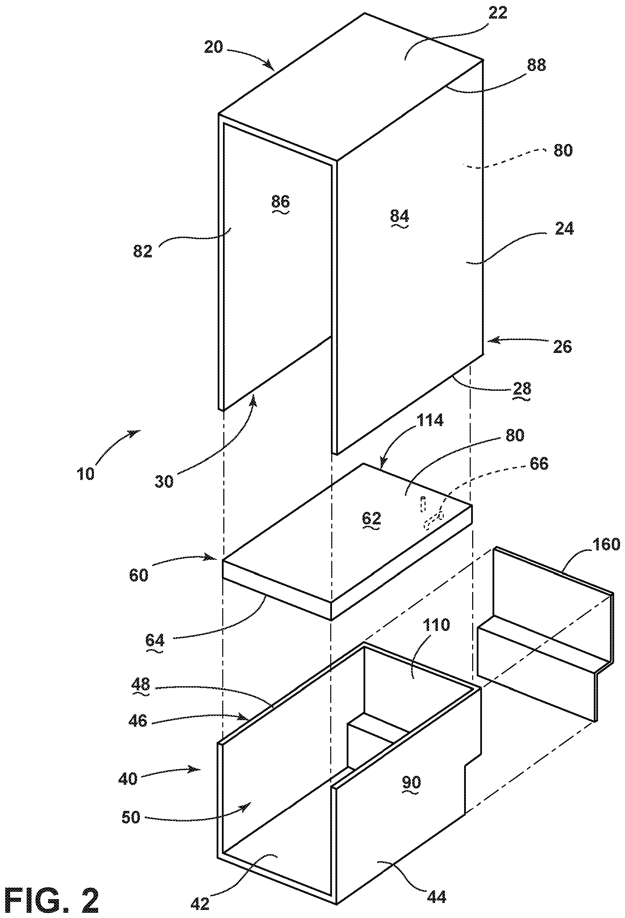

Referring again to FIGS. 2-5, the first and second vacuum insulated structures 20, 40 can be formed from an insulation material 80 disposed within a barrier film 82 and evacuated to create an at least partial, or more typically, substantially complete or complete vacuum within the barrier film 82. The outer surface 84 of the first and second vacuum insulated structures 20, 40 are hermetically sealed such that the at least partial vacuum or greater vacuum level defined within the interior 86 of the first and second vacuum insulated structures 20, 40 can be maintained throughout manufacture, assembly and use of the appliance 14. It is contemplated that the first and second vacuum insulated structures 20, 40 are manufactured such that the components of the first and second vacuum insulated structures 20, 40 are free or substantially free of apertures, openings, perforations, or other punctures defined through any of the surfaces of the first and second vacuum insulated structures 20, 40. Accordingly, the top and downward sides 22, 24 of the first vacuum insulated structure 20 and the connecting joints 88 therebetween and the bottom and upward sides 42, 44 of the second vacuum insulated structure 40 and connecting joints 88 therebetween form a continuous surface 90 that, as discussed above, is free of punctures, openings, apertures, and other discontinuities defined within the first and second vacuum insulated structures 20, 40.

According to the various alternate aspects of the disclosure, the at least one downward side 24 can include one or more downward sides 24, and typically, three sides. Similarly, the at least one upward side 44 can include one or more upward sides 44, and typically, three upward sides 44. Additional upward and/or downward sides 44, 24 may be included to provide for various utility systems 68 of the appliance 14.

Referring again to FIGS. 2-4, the intermediate insulation structure 60 can be formed from a conventional rigid foam insulation that is free of any outer wrapper 18 or other container. Accordingly, in various alternate aspects of the disclosure, it is contemplated that the lower connection surface 28 of the first vacuum insulated structure 20 and the upper connection surface 48 of the second vacuum insulated structure 40 directly engage the top and bottom surfaces 62, 64, respectively, of the intermediate insulation structure 60.

According to the various alternate aspects of the disclosure, the engagement between the intermediate insulating structure 60 and the first and second vacuum insulated structures 20, 40 can be a surface-to-surface engagement that is substantially free or free of fasteners, adhesives, welding or other connecting method. It is also contemplated that the lower connection surface 28 of the first vacuum-insulated structure 20 and/or the upper connection surface 48 of the second vacuum insulated structure 40 with the top and bottom surfaces 62, 64, respectively, of the intermediate insulating structure 60 can optionally include adhesives, fasteners, mechanical fastening mechanisms, interference mechanisms or other connecting methods beyond a surface-to-surface connection.

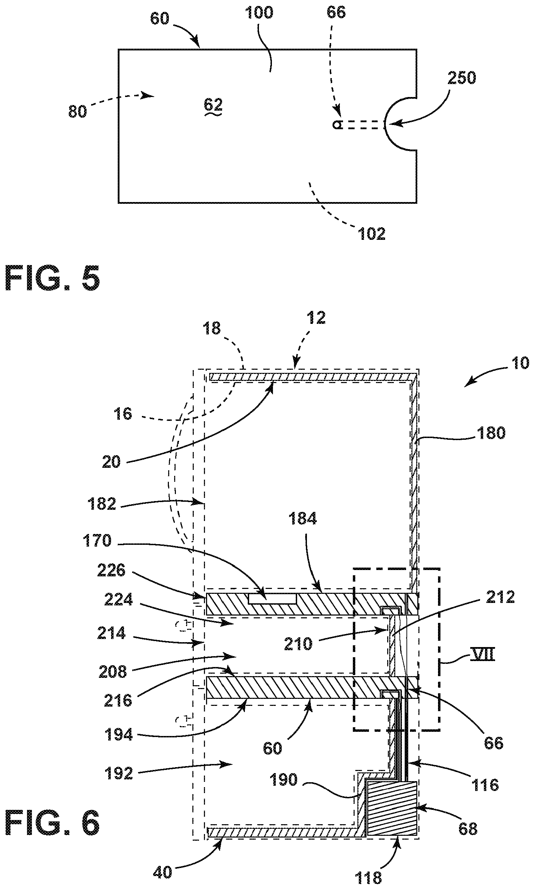

According to various alternate aspects of the disclosure, as exemplified in FIGS. 5, the intermediate insulation structure 60 can include an intermediate cover member 100 that defines an internal mullion volume 102. In such an aspect of the disclosure, it is contemplated that an insulating material is disposed within the internal mullion volume 102. As will be described more fully below, the appliance utility path 66 is disposed within the intermediate insulation structure 60 such that the various utility systems 68 of the appliance 14 can be run through portions of the intermediate insulation structure 60. In this manner, the internal mullion volume 102 of the intermediate insulation structure 60 is made to be free or substantially free of any vacuum and is not, typically, hermetically sealed. Accordingly, the appliance utility path 66 defined within the intermediate insulation structure 60 provides a path through which the various utility systems 68 can be delivered to the first and second insulated interiors 30, 50 without having to pass through either the first and/or second vacuum insulated structures 20, 40. Therefore, the first and second vacuum insulated structures 20, 40 can be maintained in a continuous or substantially continuous configuration and free of internal openings, holes, or other punctures. In this manner, the first and second vacuum insulated structures 20, 40 are free, or substantially free, of direct engagement with the appliance utility path 66.

According to the various alternate aspects of the disclosure, manufacturing the first and second vacuum insulated structures 20, 40 to be free of openings, apertures, or other punctures can serve to simplify the process of making the first and second vacuum insulated structures 20, 40. Additionally, because the first and second vacuum insulated structures 20, 40 are made to be substantially free or free of discontinuous surfaces, the occurrence of imperfections in the hermetic seal of the barrier film 82 can be lessened, as fewer corners, edges, and interconnections are included within the first and second vacuum insulated structures 20, 40. It is also contemplated that the absence of openings, apertures, or other punctures within the first and second vacuum insulated structures 20, 40 can serve to increase the insulating performance of the first and second vacuum insulated structures 20, 40, thereby increasing the energy efficiency of the first and second insulated interiors 30, 50 in the appliance 14 as a whole.

According to various alternate aspects of the disclosure, the intermediate insulation structure 60 can include a non-vacuum insulated member through which the appliance utility path 66 can be run. It is also contemplated that at least a portion of the intermediate insulation structure 60 can be made from a vacuum insulated member to form an intermediate insulating structure 60 made from a plurality of components to form a composite structure. In such an aspect of the disclosure, the appliance utility path 66 can be run through a portion of the intermediate insulation structure 60 that is not placed under a vacuum. Such a composite construction can serve to minimize the amount of the split hybrid insulation structure 10 that is not placed under an at least partial or greater vacuum, while also minimizing the occurrence of apertures, openings, and other punctures within the various vacuum insulated structures of the split hybrid insulation structure 10.

Referring again to FIGS. 2-4, the upward sides 44 of the second vacuum insulated structure 40 include a lower back wall 110 that extends upward from the bottom side 42 of the second vacuum insulated structure 40. The lower back wall 110 is set forward a predetermined distance relative to an upper back wall 112 of the first vacuum insulated structure 20. A ear portion 114 of the intermediate insulation structure 60 extends rearward of the lower back wall 110 to define an interstitial space 116 defined between the lower back wall 110 and an outer wrapper 18 of the appliance 14. At least a portion of the appliance utility path 66 is positioned within the rear portion 114 of the intermediate insulation structure 60 such that the appliance utility path 66 is in communication with the interstitial space 116. It is contemplated that at least a portion of the interstitial space 116 can include a machine compartment 118 for housing various mechanical features of the refrigerating appliance 14. Such mechanical features can include, but are not limited to, compressors, condensors, expansion devices, electrical features, water delivery systems, air handling units, and other similar mechanical fixtures. Accordingly, the various utility systems 68 of the appliance 14 can include at least one of an electrical system, a data system, a wireless communication system, a refrigeration system, a water or other liquid(s) system, an air handling system and other similar systems. It is contemplated that the interstitial space 116 defined between the lower back wall 110 and the outer wrapper 18 of the appliance 14 can extend downward from a portion of the bottom surface 64 of the intermediate insulation structure 60.

Referring again to FIGS. 2-4, the downward sides 24 of the first vacuum insulated structure 20 can include an upper back wall 112 that can engage or substantially engage the outer wrapper 18 of the appliance 14, such that the interstitial space 116 does not extend above or does not substantially extend above the intermediate insulation structure 60. According to various alternate aspects of the disclosure, the interstitial space 116 can extend both above and below the intermediate insulation structure 60 such that the upper back wall 112 and the lower back wall 110 of the first and second vacuum insulated structures 20, 40, respectively, can be at least partially offset from the outer wrapper 18 to define portions of the interstitial space 116 for housing the various utility systems 68 of the appliance 14.

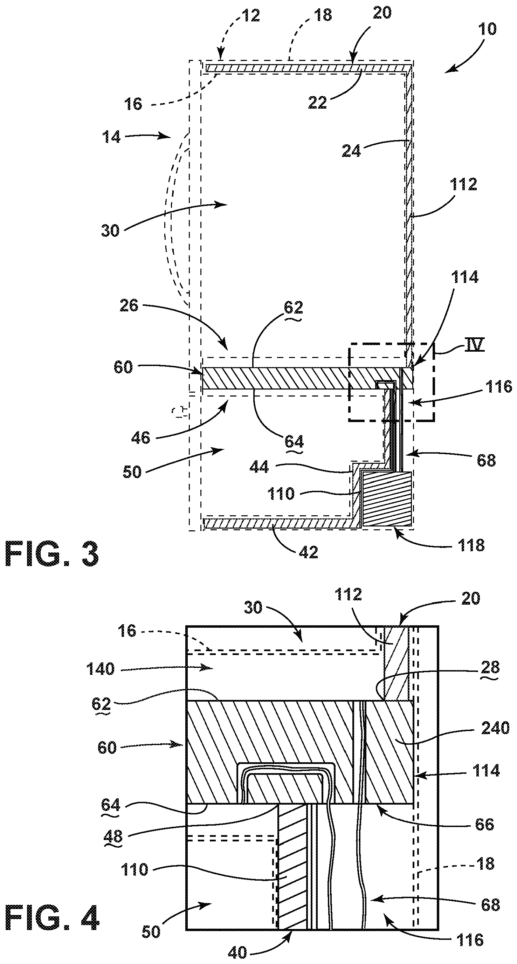

Referring again to FIGS. 3 and 4, it is contemplated that the appliance utility path 66 of the intermediate insulation structure 60 can include a plurality of conduits that extend through portions of the intermediate insulation structure 60. In this manner, first and second conduits 130, 132 of the plurality of conduits can be placed in communication with the first and second insulated interiors 30, 50, respectively. According to the various alternate aspects of the disclosure, it is also contemplated that the first and second conduits 130, 132 of the appliance utility path 66 can be used to house various portions of the utility systems 68 of the appliance 14. In this manner, the utility systems 68 can be delivered from the machine compartment 118 within the interstitial space 116 and through the appliance utility path 66 for delivery to positions at least proximate the first and second insulated interiors 30, 50.

Referring again to FIGS. 3 and 4, it is contemplated that the inner liner 16 of the appliance 14 can be offset from portions of the first vacuum insulated structure 20, the second vacuum insulated structure 40, and/or the intermediate insulation structure 60. In this manner, the utility spaces 140 can be defined between the inner liner 16 and portions of the split hybrid insulation structure 10 for housing other portions of the various utility systems 68 of the appliance 14. By way of example, and not limitation, one or more of the utility spaces 140 defined between the inner liner 16 and the split hybrid insulation structure 10 can be used to house one or more evaporators and air handlers for delivering cooling to one of the first and second insulated interiors 30, 50. Such utility spaces 140 can also be used to house one or more water filters, ice makers, air handling ducts, user interface controls, electrical wiring, refrigeration lines, and other support systems and fixtures of the various utility systems 68 of the appliance 14.

As exemplified in FIGS. 2-4, it is contemplated that portions of the first and second vacuum insulated structures 20, 40 proximate the interstitial space 116 and the utility spaces 140 can be at least partially protected through the use of a cover member 160 that extends over a portion of the first and/or second vacuum insulated structures 20, 40 to prevent damage to the first and second vacuum insulated structures 20, 40 that may affect the at least partial vacuum formed therein. Such a cover member 160 may be applied to prevent punctures of the barrier film 82 that might affect the insulated performance of the split hybrid insulation structure 10.

According to various alternate aspects of the disclosure, instead of the utility spaces 140 being incorporated between the inner liner 16 and portions of a split hybrid insulation structure 10, various components of utility systems 68 can be set within recesses 170 defined within or along the intermediate insulation structure 60. Accordingly, such recesses 170 can be placed in communication with the appliance utility path 66 such that components of the various utility systems 68 of the appliance 14 can be delivered to the recess 170 for operating the fixtures disposed therein. It is also contemplated that the various fixtures of the utility systems 68 of the appliance 14 that are disposed in the location of the intermediate insulation structure 60 can be positioned in a predetermined setting and the foam insulation of the intermediate insulation structure 60 can be sprayed or otherwise disposed around the various fixtures of the utility systems 68 of the appliance 14. In this manner, the intermediate insulation structure 60 with the various components of the utility systems 68 of the appliance 14 can be pre-made for installation within the split hybrid insulation structure 10 for manufacture within the desired appliance 14.

According to the various alternate aspects of the disclosure, a split hybrid insulation structure 10 can be used for various appliances 14 that can include, but are not limited to, refrigerators, coolers, freezers, warmers, ovens, cleaning appliances, electrical equipment, and other similar appliances 14. It is also contemplated that an appliance 14 incorporating an aspect of the split hybrid insulation structure 10 may have only a first insulated interior 30. It is also contemplated that such an appliance 14 may have more than first and second insulated interiors 30, 50.

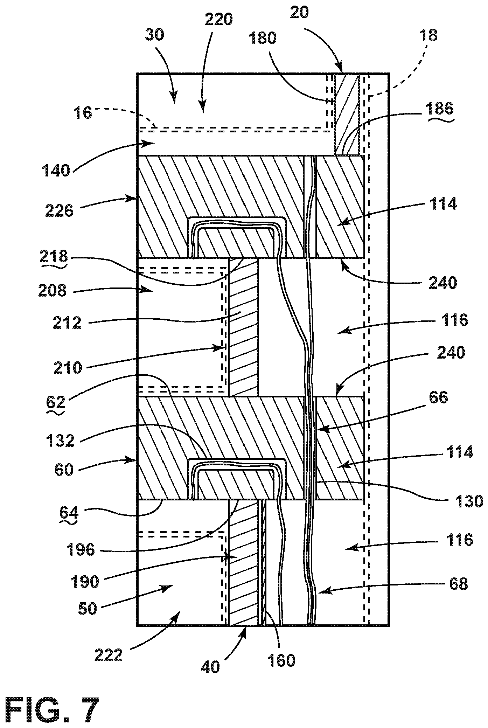

Referring now to FIGS. 6 and 7, an appliance 14 incorporating an aspect of the split hybrid insulation structure 10 can include a first vacuum insulated structure 20 having a plurality of continuous sides 180 that define an open front 182, an open end 184, and an engagement surface 186 proximate the open end 184. The continuous sides 180 of the first vacuum insulated structure 20 can at least partially define a first insulated interior 30. As discussed above, the plurality of continuous sides 180 of the first vacuum insulated structure 20 are configured to be free of internal apertures, or other punctures or openings, through the first vacuum insulated structure 20. The intermediate insulation structure 60 can include first and second surfaces that may correspond to the top and bottom surfaces 62, 64. One of the first and second surfaces is configured to receive the engagement surface 186 of the vacuum insulated structure to further define the first insulated interior 30. The intermediate insulation structure 60 can include the appliance utility path 66 within which at least one of the utility systems 68 for the appliance 14 can be disposed. The appliance utility path 66 is configured to be in communication with the first insulated interior 30 such that the utility systems 68 are delivered through the intermediate insulation structure 60 and not through the first vacuum insulated structure 20.

Referring again to FIGS. 6 and 7, it is contemplated that the split hybrid insulation structure 10 can include a second vacuum insulated structure 40 having a second plurality of continuous sides 190 that define a second open front 192 and a second open end 194 and a second engagement surface 196. The second plurality of continuous sides 190 of the second vacuum insulated structure 40 can be free of internal apertures, openings, and other punctures extending through the second vacuum insulated structure 40. The second engagement surface 196 of the second vacuum insulated structure 40 is configured to engage the other of the first and second surfaces of the intermediate insulation structure 60 to define a second insulated interior 50. As noted above, the first and second surfaces can correspond to the top and bottom surfaces 62, 64. As with the first insulated interior 30, the appliance utility path 66 is placed in communication with the second insulated interior 50.

It is also contemplated that a third vacuum insulated structure 210 having a third plurality of continuous sides 212, a third open front 214, at least one third open end 216 and at least one third engagement surface 218 can be disposed within the appliance 14. The first, second and third vacuum insulated structures 20, 40, 210 can define any one or more of a refrigerating compartment 220, freezing compartment 222 and a pantry compartment 224 within a refrigerating appliance. In such an aspect of the disclosure, a second intermediate insulation structure 226 can be disposed between the third vacuum insulated structure 210 and one of the first and second vacuum insulated structures 20, 40 to define a third insulated interior 208 that can define a pantry compartment 224 of the refrigerating appliance. It is also contemplated that each of the intermediate insulation structure 60 and the second intermediate insulation structure 226 can include a portion of the appliance utility path 66 for delivering various portions of the utility systems 68 of the appliance 14 to the first, second and third insulated interiors 30, 50, 208. In this manner, the first, second and third vacuum insulated structures 20, 40, 210 of the split hybrid insulation structure 10 can remain undisturbed or substantially undisturbed while the utility systems 68 of the appliance 14 are delivered through the intermediate insulation structure 60 and the second intermediate insulation structure 226.

It is contemplated that an area behind the third vacuum insulated structure 210 can also include a portion of the interstitial space 116 for housing at least a portion of utility systems 68 of the appliance 14, which can also provide for delivery of resources by the various utility systems 68 of the appliance 14 to the first, second and third insulated interiors 30, 50, 208. In this manner, a portion of the intermediate insulation structure 60 and/or the second intermediate insulation structure 226 can include an interstitial portion 240 that can define a boundary of the interstitial space 116. In such an aspect of the disclosure, the appliance utility path 66 can be in communication with the interstitial space 116 through the interstitial portion 240 of the intermediate insulation structure 60 and/or the second intermediate insulation structure 226.

According to the various alternate aspects of the disclosure, where the split hybrid insulation structure 10 is used within a refrigerating appliance, the refrigerating appliance can take the form of any one of several refrigerator configurations. Such configurations can include, but are not limited to, French door bottom mount, side-by-side, coffin, single cavity refrigerator, single cavity freezer, and other various multicompartment configurations that can incorporate one or both of heating and cooling functions.

Referring now to FIG. 5, the intermediate insulation structure 60 of the split hybrid insulation structure 10 can include various configurations of the appliance utility path 66. The appliance utility path 66 can be one or more conduits that extend through the material of the intermediate insulation structure 60. It is also contemplated that the appliance utility path 66 can incorporate a cutout 250 from a portion of the intermediate insulation structure 60. Where a cutout 250 is implemented, various foam insulation material 80 can be used to fill in portions of the insulation cavity 12 defined between the outer wrapper 18 and the inner liner 16 to increase the insulating performance of the split hybrid insulation structure 10.

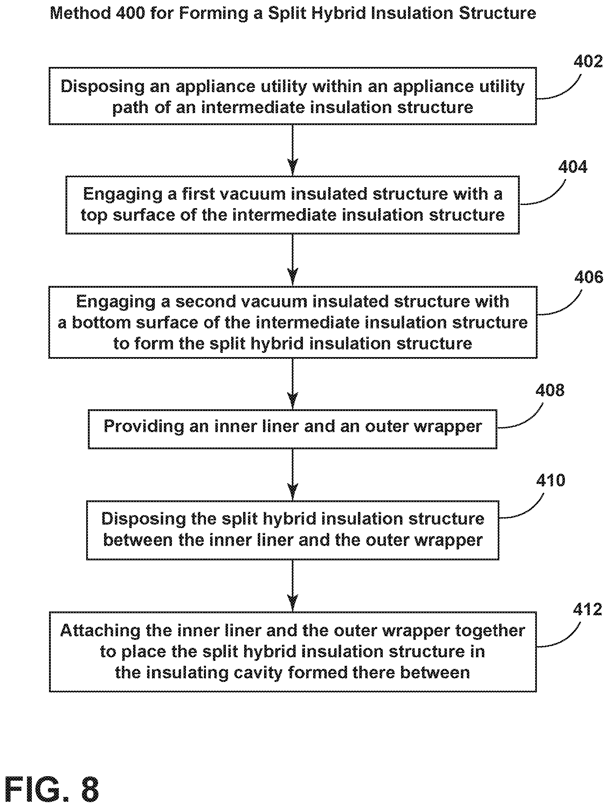

Referring now to FIGS. 1-4 and 8, having described the split hybrid insulation structure 10, a method is disclosed for forming a split hybrid insulation structure 10 for an appliance 14. This method 400 can include the step of disposing at least one utility system 68 within an appliance utility path 66 of the intermediate insulation structure 60 (step 402). By placing components of the utility systems 68 of the appliance 14 within the appliance utility path 66, before installing the first, second and/or third vacuum insulated structures 20, 40, 210, damage to the first, second and/or third vacuum insulated structures 20, 40, 210 may be minimized through the process of locating the positions of the components of the utility systems 68 prior to adding the vacuum insulated structures. The method can also include engaging the lower connection surface 28 of the first vacuum insulated structure 20 with the top surface 62 of the intermediate insulation structure 60 to define the first insulated interior 30 (step 404). In this manner, the first insulated interior 30 can be placed in communication with the appliance utility path 66 and one or more of the utility systems 68 of the appliance 14. The upper connection surface 48 of the second vacuum insulated structure 40, according to the method 400, is also moved into engagement with the bottom surface 64 of the intermediate insulation structure 60 to define the second insulated interior 50 (step 406). As with the first insulated interior 30, the second insulated interior 50 is placed in communication with the appliance utility path 66 and at least one of the utility systems 68 of the appliance 14. It is contemplated that the engagement of the first and second vacuum insulated structures 20, 40 with the intermediate insulation structure 60 forms or substantially forms the split hybrid insulation structure 10.

According to various alternate aspects of the disclosure, it is contemplated that the one or more utility systems 68 of the appliance 14 can be installed through the intermediate insulation structure 60 after the first and second vacuum insulated structures 20, 40 are engaged with the intermediate insulation structure 60. The installation of the components of the utility systems 68 can be installed after formation of the split hybrid insulation structure 10 so long as substantial damage to the first and/or second vacuum insulated structures 20, 40 that may damage the vacuum formed therein or negatively affect the insulating performance of the structures can be avoided.

Referring again to FIGS. 1-4 and 8, the method 400 also includes providing an outer wrapper 18 and an inner liner 16 for the appliance 14 (step 408). It is contemplated that the split hybrid insulation structure 10 can be disposed between the inner liner 16 and the outer wrapper 18 (step 410). The method 400 also includes the step of connecting the inner liner 16 to the outer wrapper 18 to form the insulating cavity therebetween (step 412). In this manner, the split hybrid insulation structure 10 is disposed within the insulation cavity 12 and an interstitial space 116 can be defined between the first and/or second vacuum insulated structures 20, 40 in the outer wrapper 18. As discussed above, the interstitial space 116 can at least partially define the machine compartment 118 of the appliance 14.

## Claims

1. An appliance (14) comprising:
a first vacuum insulated structure (20) having a plurality of continuous sides (180) that define an open front (182), an open end (184) and an engagement surface (186) proximate the open end (184), wherein the continuous sides (180) at least partially define a first insulated interior (30), and wherein the plurality of continuous sides (180) is free of internal apertures through the first vacuum insulated structure (20);
an intermediate insulation structure (60) having a first surface and a second surface, wherein one of the first and second surfaces receives the engagement surface (186) to further define the first insulated interior (30), and wherein the intermediate insulation structure (60) includes an appliance utility path (66) within which at least one utility for the appliance (14) is disposed, and wherein the appliance utility path (66) is in communication with the first insulated interior (30); and
**characterized in that** the appliance further comprises a second vacuum insulated structure (40) having a second plurality of continuous sides (180) that define a second open front (192), a second open end (194) and a second engagement surface (196), wherein the second plurality of continuous sides (180) is free of internal apertures extending through the second vacuum insulated structure (40), wherein the second engagement surface (196) engages the other of the first and second surfaces of the intermediate insulation structure (60) to define a second insulated interior (50), and wherein the appliance utility path (66) is in communication with the second insulated interior (50), wherein at least an upward side (44) of the second vacuum insulated structure (40) includes a lower back wall (110) that extends upward from a bottom side (42) of the second vacuum insulated structure (40),
wherein the lower back wall (110) is set forward a predetermined distance relative to an upper back wall (112) of the first vacuum insulated structure (20),
wherein a rear portion (114) of the intermediate insulation structure (60) extends rearward of the lower back wall (110) to define an interstitial space (116) defined between the lower back wall (110) and an outer wrapper (18) of the appliance (14) and
wherein at least a portion of the appliance utility path (66) is positioned within the rear portion (114) of the intermediate insulation structure (60) such that the appliance utility path (66) is in communication with the interstitial space (116).

2. The appliance (14) of claim 1, wherein the interstitial space (116) includes a machine compartment (118).

3. The appliance (14) of claim 1 or claim 2, wherein the intermediate insulation structure (60) includes an internal mullion volume (102) and an insulating material disposed within the internal mullion volume (102), and wherein the internal mullion volume (102) is free of a vacuum.

4. The appliance (14) of any one or more of claims 1-3, wherein the appliance utility path (66) includes a plurality of conduits that extends through portions of the intermediate insulation structure (60), wherein first and second conduits (130, 132) of the plurality of conduits are in communication with the first and second insulated interiors (30, 50), respectively.

5. The appliance (14) of any one or more of claims 1-4, wherein the at least one utility for the appliance (14) includes one or more of an electrical system, a refrigeration system, a water system and an air handling system.

## Patentansprüche

1. Gerät (14), umfassend:
eine erste vakuumisolierte Struktur (20) mit einer Vielzahl von durchgehenden Seiten (180), die eine offene Vorderfront (182), ein offenes Ende (184) und eine Eingriffsfläche (186) in der Nähe des offenen Endes (184) definieren, wobei die durchgehenden Seiten (180) mindestens teilweise einen ersten isolierten Innenraum (30) definieren, und wobei die Vielzahl von durchgehenden Seiten (180) frei von inneren Öffnungen durch die erste vakuumisolierte Struktur (20) ist;
eine Zwischen-Isolationsstruktur (60) mit einer ersten Oberfläche und einer zweiten Oberfläche, wobei eine der ersten und zweiten Oberflächen die Eingriffsfläche (186) aufnimmt, um den ersten isolierten Innenraum (30) weiter zu definieren, und wobei die Zwischen-Isolationsstruktur (60) einen Geräteversorgungspfad (66) beinhaltet, innerhalb dessen mindestens eine Versorgung für das Gerät (14) angeordnet ist, und wobei der Geräteversorgungspfad (66) mit dem ersten isolierten Innenraum (30) in Verbindung steht; und
**dadurch gekennzeichnet, dass** das Gerät weiter eine zweite vakuumisolierte Struktur (40) mit einer zweiten Vielzahl von durchgehenden Seiten (180) umfasst, die eine zweite offene Vorderfront (192), ein zweites offenes Ende (194) und eine zweite Eingriffsfläche (196) definieren, wobei die zweite Vielzahl von durchgehenden Seiten (180) frei von inneren Öffnungen ist, die sich durch die zweite vakuumisolierte Struktur (40) erstrecken, wobei die zweite Eingriffsfläche (196) mit der anderen der ersten und zweiten Oberflächen der Zwischen-Isolationsstruktur (60) in Eingriff steht, um einen zweiten isolierten Innenraum (50) zu definieren, und wobei der Geräteversorgungspfad (66) mit dem zweiten isolierten Innenraum (50) in Verbindung steht,
wobei mindestens eine Aufwärtsseite (44) der zweiten vakuumisolierten Struktur (40) eine untere Rückwand (110) beinhaltet, die sich von einer Unterseite (42) der zweiten vakuumisolierten Struktur (40) nach oben erstreckt,
wobei die untere Rückwand (110) um einen vorbestimmten Abstand relativ zu einer oberen Rückwand (112) der ersten vakuumisolierten Struktur (20) nach vorne versetzt ist,
wobei sich ein hinterer Abschnitt (114) der Zwischen-Isolationsstruktur (60) von der unteren Rückwand (110) nach hinten erstreckt, um einen Zwischenraum (116) zu definieren, der zwischen der unteren Rückwand (110) und einer äußeren Umhüllung (18) des Geräts (14) definiert ist, und
wobei mindestens ein Abschnitt des Geräteversorgungspfades (66) innerhalb des hinteren Abschnitts (114) der Zwischen-Isolationsstruktur (60) so positioniert ist, dass der Geräteversorgungspfad (66) mit dem Zwischenraum (116) in Verbindung steht.

2. Gerät (14) nach Anspruch 1, wobei der Zwischenraum (116) einen Maschinenraum (118) beinhaltet.

3. Gerät (14) nach Anspruch 1 oder Anspruch 2, wobei die Zwischen-Isolationsstruktur (60) ein inneres Pfostenvolumen (102) und ein innerhalb des inneren Pfostenvolumens (102) angeordnetes Isoliermaterial beinhaltet und wobei das innere Pfostenvolumen (102) frei von einem Vakuum ist.

4. Gerät (14) nach einem oder mehreren der Ansprüche 1-3, wobei der Geräteversorgungspfad (66) eine Vielzahl von Leitungen beinhaltet, die sich durch Abschnitte der Zwischen-Isolationsstruktur (60) erstrecken, wobei erste und zweite Leitungen (130, 132) der Vielzahl von Leitungen jeweils mit dem ersten bzw. zweiten isolierten Innenraum (30, 50) in Verbindung stehen.

5. Gerät (14) nach einem oder mehreren der Ansprüche 1-4, wobei die mindestens eine Versorgung für das Gerät (14) ein oder mehrere von einem elektrischen System, einem Kühlsystem, einem Wassersystem und einem Luftbehandlungssystem beinhaltet.

## Revendications

1. Appareil (14) comprenant :
une première structure isolée sous vide (20) ayant une pluralité de côtés continus (180) qui définissent un avant ouvert (182), une extrémité ouverte (184) et une surface de mise en prise (186) proche de l'extrémité ouverte (184), dans lequel les côtés continus (180) définissent au moins partiellement un premier intérieur isolé (30), et dans lequel la pluralité de côtés continus (180) est exempte d'ouvertures internes à travers la première structure isolée sous vide (20) ;
une structure d'isolation intermédiaire (60) ayant une première surface et une seconde surface, dans lequel l'une des première et seconde surfaces reçoit la surface de mise en prise (186) pour définir en outre le premier intérieur isolé (30), et dans lequel la structure d'isolation intermédiaire (60) inclut un chemin d'utilité d'appareil (66) à l'intérieur duquel au moins une utilité pour l'appareil (14) est disposée, et dans lequel le chemin d'utilité d'appareil (66) est en communication avec le premier intérieur isolé (30) ; et
**caractérisé en ce que** l'appareil comprend en outre une seconde structure isolée sous vide (40) ayant une seconde pluralité de côtés continus (180) qui définissent un second avant ouvert (192), une seconde extrémité ouverte (194) et une seconde surface de mise en prise (196), dans lequel la seconde pluralité de côtés continus (180) est exempte d'ouvertures internes s'étendant à travers la seconde structure isolée sous vide (40), dans lequel la seconde surface de mise en prise (196) met en prise l'autre des première et seconde surfaces de la structure d'isolation intermédiaire (60) pour définir un second intérieur isolé (50), et dans lequel le chemin d'utilité d'appareil (66) est en communication avec le second intérieur isolé (50),
dans lequel au moins un côté ascendant (44) de la seconde structure isolée sous vide (40) inclut une paroi arrière inférieure (110) qui s'étend vers le haut à partir d'un côté de fond (42) de la seconde structure isolée sous vide (40),
dans lequel la paroi arrière inférieure (110) est mise en avant sur une distance prédéterminée par rapport à une paroi arrière supérieure (112) de la première structure isolée sous vide (20),
dans lequel une portion arrière (114) de la structure d'isolation intermédiaire (60) s'étend vers l'arrière de la paroi arrière inférieure (110) pour définir un espace interstitiel (116) défini entre la paroi arrière inférieure (110) et un emballage extérieur (18) de l'appareil (14), et
dans lequel au moins une portion du chemin d'utilité d'appareil (66) est positionnée dans la portion arrière (114) de la structure d'isolation intermédiaire (60) de sorte que le chemin d'utilité d'appareil (66) est en communication avec l'espace interstitiel (116).

2. Appareil (14) selon la revendication 1, dans lequel l'espace interstitiel (116) inclut un compartiment machine (118).

3. Appareil (14) selon la revendication 1 ou la revendication 2, dans lequel la structure d'isolation intermédiaire (60) inclut un volume de meneau interne (102) et une matière isolante disposée à l'intérieur du volume de meneau interne (102), et dans lequel le volume de meneau interne (102) est exempt de vide.

4. Appareil (14) selon l'une quelconque ou plus des revendications 1 à 3, dans lequel le chemin d'utilité d'appareil (66) inclut une pluralité de conduits qui s'étendent à travers des portions de la structure d'isolation intermédiaire (60), dans lequel des premier et second conduits (130, 132) de la pluralité de conduits sont respectivement en communication avec les premier et second intérieurs isolés (30, 50).

5. Appareil (14) selon l'une quelconque ou plus des revendications 1 à 4, dans lequel l'au moins une utilité pour l'appareil (14) inclut un ou plusieurs d'un système électrique, d'un système de réfrigération, d'un système hydraulique et d'un système de traitement de l'air.
